# EUROPEAN PATENT APPLICATION

(11) **EP 4 694 432 A1**
(43) Date of publication of application: **11.02.2026**
(21) Application number: 24936198.1
(22) Date of filing: 01.11.2024
(51) Int. Cl.: H04W 68/00

(54) **COMMUNICATION METHOD AND APPARATUS, AND DEVICE AND MEDIUM**

(30) Priority: 10.05.2024 CN 202410579071
(71) Applicant: China Satellite Network Innovation Co., Ltd, Beijing 100029 (CN)
(72) Inventor: ZHOU, Changsheng, Beijing 100029 (CN); GAO, Ming, Beijing 100029 (CN); SUN, Yuexin, Beijing 100029 (CN); WANG, Qinglong, Beijing 100029 (CN); MANG, Ge, Beijing 100029 (CN); QI, Dongqing, Beijing 100029 (CN); YAO, Dingyi, Beijing 100029 (CN); MEI, Chengli, Beijing 100029 (CN); CUI, Yuling, Beijing 100029 (CN)
(74) Representative: Novagraaf Technologies
(86) International application number: PCT/CN2024/129462
(87) International publication number: WO 2025/232117

(57) **Abstract**

The present disclosure provides a communication method and device, an apparatus and a medium, configured to page a UE. In the embodiments of the present disclosure, a first satellite base station may send a first request to a core network device, wherein the first request may include first information, the first information may include at least one access network identity each corresponding to an access network type supported by the first satellite base station, such that the core network device may determine, based on the first information, a target satellite base station configured to page a UE, and may send a paging request for the UE to the target satellite base station, and the target satellite base station may page the UE after receiving the paging request.

## Description

### Cross-Reference to Related Application

The present disclosure claims priority to Chinese Patent Application No. 202410579071.5, filed with the Chinese Patent Office on May 10, 2024 and entitled "Communication Method and Device, Apparatus and Medium", which is incorporated herein by reference in its entirety.

### Technical Field

The present disclosure relates to the technical field of communications, and in particular, to a communication method and device, an apparatus and a medium.

### Background

In the technical field of communications, the Space-Air-Ground integrated network is a development trend, and it is a key feature to deploy a base station onto a satellite thereof.

However, compared with a terrestrial cellular network, a low earth orbit satellite communication system has features such as high mobility speed, wide beam coverage, and long transmission delay. After a base station is deployed onto a satellite, how a core network device pages User Equipment (UE) is a technical problem to be solved urgently at present.

### Summary

The present disclosure provides a communication method and device, an apparatus and a medium, configured to page a UE.

According to a first aspect, the present disclosure provides a communication method. The method is applied to a first satellite base station. The method includes:
sending a first request to a core network device, wherein the first request comprises first information, the first information comprises at least one access network identity each corresponding to an access network type supported by the first satellite base station; the first information is configured to determine a target satellite base station, and the target satellite base station is a satellite base station which receives a paging request from the core network device.

In a possible implementation, the access network identity is configured to represent at least one of an orbital altitude, a frequency band or a polarization mode of an access network.

In a possible implementation, the method further includes:
receiving a registration request sent by a UE; and
sending an initial **UE** message for the **UE** to the core network device in response to the registration request.

In a possible implementation, the first information is configured to determine a target satellite base station, including:
in a case where the first information comprises one access network identity, the one access network identity being configured to determine the target satellite base station; and/or,
in a case where the first information comprises a plurality of access network identities, the initial **UE** message comprising a first access network identity, the first access network identity being one of the plurality of access network identities, and the first access network identity being configured to determine the target satellite base station, wherein the first access network identity is determined according to an access network type used by the UE.

In a possible implementation, the access network type used by the **UE** is determined based on frequency band information to which a frequency point used by the **UE** belongs.

In a possible implementation, in a case where the first information comprises the one access network identity, the paging request comprises the one access network identity and beam footprint information; and/or,
in a case where the first information comprises a plurality of access network identities, the paging request comprises the first access network identity and beam footprint information.

In a possible implementation, the target satellite base station includes at least one base station.

According to a second aspect, the present disclosure provides a communication method, applied to a core network device. The method includes:
receiving a first request sent by a first satellite base station, wherein the first request comprises first information, the first information comprises at least one access network identity each corresponding to an access network type supported by the first satellite base station, and the first information is configured to determine a target satellite base station; and
sending a paging request to the target satellite base station.

In a possible implementation, the access network identity is configured to represent at least one of an orbital altitude, a frequency band or a polarization mode of an access network.

In a possible implementation, after receiving the first request sent by the first satellite base station and before sending the paging request to the target satellite base station, the method further includes:
receiving an initial UE message for a UE sent by the first satellite base station.

In a possible implementation, the first information is configured to determine a target satellite base station, including:
in a case where the first information comprises one access network identity, the one access network identity being configured to determine the target satellite base station; and/or,
in a case where the initial UE message comprises a first access network identity, the first access network identity being configured to determine the target satellite base station, wherein the first access network identity is one of a plurality of access network identities comprised in the first information, and the first access network identity is determined according to an access network type used by the UE.

In a possible implementation, in a case where the first information comprises one access network identity, the paging request comprises the one access network identity and beam footprint information; and/or,
in a case where the first information comprises the plurality of access network identities, the paging request comprises the first access network identity and beam footprint information.

In a possible implementation, the target satellite base station includes at least one base station.

In a possible implementation, wherein after receiving the initial UE message for the UE sent by the first satellite base station and before sending the paging request to the target satellite base station, the method further includes:
in a case where the first information comprises one access network identity, storing the one access network identity in a user context corresponding to the UE;
in a case where the initial UE message comprises a first access network identity, storing the first access network identity in the user context corresponding to the UE.

In a possible implementation, after receiving the first request sent by the first satellite base station and before sending the paging request to the target satellite base station, the method further includes:
storing a corresponding relationship between the first satellite base station and the first information.

In a possible implementation, the first information is configured to determine a target satellite base station, including:
in a case where the first information comprises the one access network identity, the one access network identity and a stored corresponding relationship between a satellite base station and the first information being configured to determine the target satellite base station; and
in a case where the initial UE message comprises the first access network identity, the first access network identity and a stored corresponding relationship between a satellite base station and the first information being configured to determine the target satellite base station.

According to a third aspect, the present disclosure provides a communication apparatus, including a unit or a module configured to execute any one of methods according to the first aspect, or including a unit or a module configured to execute any one of methods according to the second aspect.

When the communication apparatus executes the steps of any one of methods according to the first aspect, the communication apparatus includes:
a first sending module, configured to send a first request to a core network device, wherein the first request includes first information, the first information includes at least one access network identity, and the access network identity corresponds to an access network type supported by the first satellite base station; the first information is configured to determine a target satellite base station, and the target satellite base station receives a paging request from the core network device.

In a possible implementation, the access network identity is configured to represent at least one of an orbital altitude, a frequency band or a polarization mode of an access network.

In a possible implementation, the apparatus further includes:
a first receiving module, configured to receive a registration request sent by a UE; and
a second sending module, configured to send an Initial UE Message for the UE to the core network device in response to the registration request.

In a possible implementation, the second sending module is specifically configured such that:
in a case where the first information includes one access network identity, the access network identity is configured to determine the target satellite base station; and/or,
in a case where the first information includes a plurality of access network identities, the initial UE message includes a first access network identity, the first access network identity is one of the plurality of access network identities, and the first access network identity is configured to determine the target satellite base station, wherein the first access network identity is determined according to an access network type used by the UE.

In a possible implementation, the access network type used by the UE is determined based on frequency band information to which a frequency point used by the UE belongs.

In a possible implementation, in a case where the first information includes one access network identity, the paging request includes the access network identity and beam footprint information; and/or,
in a case where the first information includes a plurality of access network identities, the paging request includes the first access network identity and beam footprint information.

In a possible implementation, the target satellite base station includes at least one base station.

When the communication apparatus executes the steps of any one of methods according to the second aspect, the communication apparatus includes:
a second receiving module, configured to receive a first request sent by a first satellite base station, wherein the first request includes first information, the first information includes at least one access network identity, the access network identity is an access network identity corresponding to an access network type supported by the first satellite base station, and the first information is configured to determine a target satellite base station; and
a paging module, configured to send a paging request to the target satellite base station.

In a possible implementation, the access network identity is configured to represent at least one of an orbital altitude, a frequency band or a polarization mode of an access network.

In a possible implementation, the second receiving module is further configured to:
receive an initial UE message for a UE sent by the first satellite base station.

In a possible implementation, the second receiving module is further configured such that:
in a case where the first information includes one access network identity, the access network identity is configured to determine the target satellite base station; and/or,
in a case where the initial UE message includes a first access network identity, the first access network identity is configured to determine the target satellite base station, wherein the first access network identity is one of a plurality of access network identities included in the first information, and the first access network identity is determined according to an access network type used by the UE.

In a possible implementation, in a case where the first information includes one access network identity, the paging request includes the access network identity and beam footprint information; and/or,
in a case where the first information includes a plurality of access network identities, the paging request includes the first access network identity and beam footprint information.

In a possible implementation, the target satellite base station includes at least one base station.

In a possible implementation, the apparatus further includes:
a storing module, configured to, in a case where the first information includes one access network identity, store the access network identity in a user context corresponding to the UE, and
in a case where the initial UE message includes a first access network identity, store the first access network identity in a user context corresponding to the UE.

In a possible implementation, the storing module is further configured to:
store a corresponding relationship between the first satellite base station and the first information.

In a possible implementation, the second receiving module is further configured such that:
in a case where the first information includes one access network identity, the access network identity and a stored corresponding relationship between the satellite base station and the first information are configured to determine the target satellite base station; and
in a case where the Initial UE Message includes the first access network identity, the first access network identity and a stored corresponding relationship between the satellite base station and the first information are configured to determine the target satellite base station.

According to a fourth aspect, the present disclosure provides a communication apparatus, including: one or more processors, configured to execute the steps of any one of methods according to the first aspect, or to execute the steps of any one of methods according to the second aspect.

According to a fifth aspect, the present disclosure provides a communication system. The communication system includes: a first satellite base station that performs the steps of any one of methods according to the first aspect, and a core network device that performs the steps of any one of methods according to the second aspect.

According to a sixth aspect, the present disclosure provides a computer readable storage medium. The computer readable storage medium stores a computer program or an instruction that, when executed by a communication apparatus, implements the steps of any one of methods according to the first aspect, or implements the steps of any one of methods according to the second aspect.

According to a seventh aspect, the present disclosure provides a computer program product. When the computer program product is invoked by a computer, causes the computer to execute the steps of any one of methods according to first aspect, or to execute the steps of any one of methods according to the second aspect.

### Brief Description of the Drawings

To describe the technical solutions in the embodiments of the present disclosure more clearly, the accompanying drawings used for describing the embodiments will be briefly introduced below. Apparently, the drawings in the following description are merely some embodiments of the present disclosure, and a person of ordinary skill in the art may still derive other drawings from these drawings without paying inventive efforts.
Fig. 1 is a schematic diagram of a communication process according to an embodiment of the present disclosure;
Fig. 2 is a schematic diagram of another communication process according to an embodiment of the present disclosure;
Fig. 3 is a schematic diagram of yet another communication process according to an embodiment of the present disclosure;
Fig. 4 is a schematic structural diagram of a communication device according to an embodiment of the present disclosure;
Fig. 5 is a schematic structural diagram of another communication device according to an embodiment of the present disclosure;
Fig. 6 is a schematic structural diagram of yet another communication device according to an embodiment of the present disclosure; and
Fig. 7 is a schematic structural diagram of a communication system according to an embodiment of the present disclosure.

### Detailed Description of the Embodiments

In order to make the objectives and implementations of the present disclosure clearer, the exemplary implementations of the present disclosure will be described clearly and completely with reference to the drawings in the exemplary embodiments of the present disclosure. Apparently, the exemplary embodiments described are merely some rather than all of the embodiments of the present disclosure.

It should be noted that, a brief description of a term in the present disclosure is only intended to facilitate understanding of the embodiments described below, and is not intended to limit the embodiments of the present disclosure. Unless otherwise indicated, these terms shall be construed in accordance with their plain and ordinary meanings.

The terms such as "first", "second" and "third" in the description and the claims of the present disclosure and the accompanying drawings are used to distinguish similar or identical objects or entities, and do not necessarily imply a particular order or sequence, unless otherwise indicated. It should be understood that the terms are interchangeable under appropriate circumstances.

The terms "include/comprise" and "have" and any variations thereof, are intended to cover a non-exclusive inclusion. For example, a product or an apparatus that includes a series of components is not necessarily limited to those expressly listed components, but may include other components not expressly listed or inherent to such products or apparatuses.

The term "module" refers to any known or later developed hardware, software, firmware, artificial intelligence, fuzzy logic, or combination of hardware and/or software code that is capable of performing the functions associated with that element.

Finally, it should be noted that the above embodiments are merely used for describing the technical solutions of the present disclosure rather than limiting the present disclosure. Although the present disclosure is described in detail with reference to the foregoing embodiments, persons of ordinary skill in the art should understand that modifications may still be made to the technical solutions described in the foregoing embodiments, or equivalent replacements may be made to some or all technical features thereof. These modifications or replacements do not make the essence of the corresponding technical solutions depart from the scope of the technical solutions of the embodiments of the present disclosure.

The foregoing description has been made with reference to specific embodiments for ease of explanation. However, the foregoing exemplary discussion is not intended to be exhaustive or to limit the embodiments to the specific forms disclosed above. Numerous modifications and variations are possible in light of the described teachings. The foregoing embodiments are selected and described for the purpose of better explaining the principles and the practical application, thereby enabling those skilled in the art to better utilize the described embodiments and various modified embodiments adapted to specific applications.

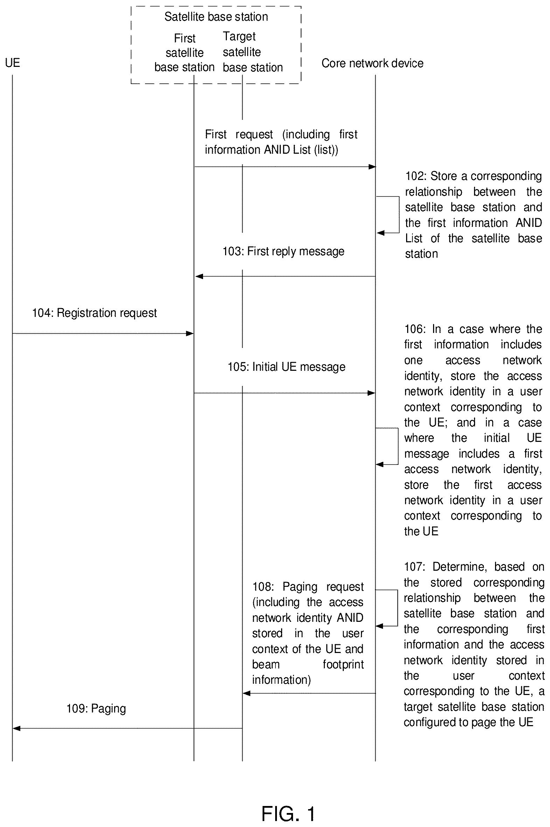

The embodiments of the present disclosure will be described below with reference to FIGS. 1-7.

FIG. 1 is a schematic diagram of a communication process according to an embodiment of the present disclosure. The process includes the following steps:
S101: A first satellite base station sends a first request to a core network device, wherein the first request includes first information.

In the embodiments of the present disclosure, the satellite base station (e.g., the first satellite base station, the target satellite base station, etc.) may be a base station configured on a satellite. The communication process in the embodiments of the present disclosure may be performed in a Non Terrestrial Network (NTN) scenario. The core network device may be configured on a satellite, and may also be configured on the ground, which is not specifically limited in the present disclosure. For ease of description, the core network device in the embodiments of the present disclosure may also be uniformly referred to as a satellite core network device, and the User Equipment (UE) is referred to as a satellite UE.

The embodiments of the present disclosure may be applied to various communication systems, such as a Long Term Evolution (LTE) system, an LTE Frequency Division Duplex (FDD) system, an LTE Time Division Duplex (TDD) system, a Universal Mobile Telecommunication System (UMTS), a Worldwide Interoperability for Mictrave Access (WiMAX) communication system, a 5th Generation (5G) system, or a New Radio (NR) or a subsequent evolution communication system, and the embodiments of the present disclosure are not limited thereto. It should be understood that the embodiments of the present disclosure may be applied to a future communication system, for example, a 6th generation (6G) system. When the embodiments of the present disclosure are applied to future communication systems, names of UEs (UE devices), satellite base stations, core network devices, etc. may change, and the embodiments of the present disclosure are not limited thereto. For ease of understanding, the specific solutions will be described below by taking an example in which the embodiments of the present disclosure are applied to a 5G system.

The core network device (e.g. a satellite 5G core network device) may include: a Unified Data Management (UDM) network element, an Access and Mobility Function (AMF) network element, a Session Management Function (SMF) network element, a Policy Control Function (PCF) network element, an Application Function (AF) network element, a User Plane Function (UPF) network element, a Network Exposure Function (NEF) network element, a Network Repository Function (NRF) network element, a Network Slice Selection Function (NSSF) network element, an Authentication Server Function (AUSF) network element, etc. These functional units may work independently, or be combined together to implement some control functions. For example, the AMF, the SMF and the PCF may be combined together to serve as a management device, which is configured to complete access control and mobility management functions of a UE device such as access authentication, security encryption and location registration, session management functions such as establishment, release and modification of a user plane transmission path, and functions for analyzing some slice related data (e.g. congestion) and UE device related data. Details are not described herein.

Any satellite base station (e.g. a first satellite base station) may send a first request to a core network device during startup initialization, etc. The first request may be a Next Generation (NG) Setup Request (NG Setup Request), and the first request may be used for establishing a Next Generation Application Protocol connection (NGAP connection, i.e. an NG connection) between the core network device and the satellite base station (e.g. the first satellite base station). The first information may include at least one (one or more) access network identity, and the access network identity may represent an access network identity corresponding to an access network type supported by the satellite base station (e.g. the first satellite base station). In an implementation, the first information may be an access network identity list (ANID List).

A number of access network types supported by the satellite base station may be one or more, which is not specifically limited in the present disclosure. The specific content of the access network identity is not specifically limited in the present disclosure. For example, the access network identity (ANID) may be a number, a letter, a combination thereof, etc. Taking a number as the ANID for an example, the ANID may be an integer number, for example, 0, 1, 2, 3, and so on.

S102: The core network device stores a corresponding relationship between the satellite base station (e.g. the first satellite base station) and corresponding first information.

After receiving the first request (NG setup request) sent by the satellite base station (e.g. the first satellite base station), the core network device may identify first information (ANID List) included in the first request. Taking the first satellite base station as the satellite base station for an example, the core network device may store a corresponding relationship between the first satellite base station and an access network identity (first information) corresponding to an access network type supported by the first satellite base station. In addition, the core network device may also store a corresponding relationship between the NG connection with the satellite base station (e.g. the first satellite base station), the satellite base station (e.g. the first satellite base station), and the first information corresponding to the satellite base station (e.g. the first satellite base station).

It can be understood that, after receiving the first request (NG setup request) sent by a satellite base station other than the first satellite base station, the core network device may also identify the first information (ANID List) included in the first request, and store a corresponding relationship between the satellite base station (other satellite base station) and an access network identity (first information) corresponding to an access network type supported by the satellite base station, which is not described herein again.

S103: The core network device sends a first reply message (e.g. an NG setup reply message) to the satellite base station (e.g. the first satellite base station), wherein the first reply message may indicate that an NG connection has been established successfully.

S104: The UE sends a registration request to the first satellite base station.

In a possible implementation, the UE may send a registration request to the first satellite base station, and the first satellite base station may receive the registration request sent by the UE (which may also be referred to as a satellite UE), wherein the registration request may be configured to request to register the UE with a core network. In an exemplary embodiment, the registration request may carry an identity of the UE (the identity of the UE may also be referred to as a user identity). Definitely, the registration request may not carry the identity of the UE, which is not specifically limited in the present disclosure. In addition, besides the identity of the UE, the registration request may further include parameters such as a registration type, a UE capability and a requested slice, which is not described herein again.

S105: After receiving the registration request sent by the UE, the first satellite base station may send an initial UE message to the core network device in response to the registration request.

After receiving the registration request initiated by the UE, in response to the registration request, the first satellite base station may select a core network device according to parameters such as a user identity (user temporary identity) or a slice carried in the registration request, and send an initial UE message to the core network device, wherein the Initial UE message may trigger the core network device to register the UE with the core network. Information included in the initial UE message is not specifically limited in the present disclosure. For example, the Initial UE message may carry an identity of the UE. Definitely, the Initial UE message may also not carry the identity of the UE, which is not specifically limited in the present disclosure.

In a possible implementation, after receiving the registration request sent by the UE and before sending the Initial UE message to the core network device, the first satellite base station may determine whether an access network type used by the UE is an access network type supported by the first satellite base station. That is, it may determine whether the access network identity corresponding to the access network type used by the UE is in the first information. If yes, the step of sending the Initial UE message to the core network device may be performed. It will be understood that, in a case where the access network identity corresponding to the access network type used by the UE is not in the first information, it may be considered that the access network type used by the UE is not the access network type supported by the first satellite base station, and the step of sending the Initial UE message to the core network device may not be performed. For example, in a case where the access network type used by the UE is L frequency band-right hand (for ease of description, the access network type with a frequency band being L frequency band and a polarization direction being right hand is referred to as L frequency band-right hand), but the access network type supported by the first satellite base station does not include the L frequency band-right hand, that is, in a case where the first satellite base station does not support the access network of the L frequency band-right hand, the first satellite base station may not perform the step of sending the Initial UE message to the core network device.

The embodiments of the present disclosure provide two different Initial UE messages and two different methods for determining a target satellite base station corresponding to the two different Initial UE messages. The two methods will be respectively introduced below.

Method I: in a case where the number of access network types supported by the first satellite base station is one, that is, in a case where the first information of the first satellite base station includes one access network identity, the Initial UE message sent by the first satellite base station to the core network device may not include the access network identity.

In a possible implementation, in a case where the Initial UE message does not include an access network identity, the core network device may determine whether the number of access network identities in the first information received from the first satellite base station is one; and in a case where the number of access network identities in the first information from the first satellite base station is one, the target satellite base station configured to page a UE may be determined based on the access network identity.

In a possible implementation, when receiving the first information of the first satellite base station, the core network device may determine the number of access network identities included in the first information; and in a case where the number of access network identities in the first information is one, the target satellite base station configured to page a UE may be determined subsequently based on the access network identity.

Method II: in a case where there are a plurality of access network identities corresponding to the access network types supported by the first satellite base station, that is, in a case where the first information of the first satellite base station includes a plurality of access network identities, the first satellite base station may identify an access network type used by the UE, so as to obtain an access network identity corresponding to the access network type used by the UE, and take the access network identity as a first access network identity included in an Initial UE message, and send the first access network identity to the core network device. That is, the first satellite base station may send, to the core network device, an Initial UE message including the first access network identity. The core network device may determine, based on the first access network identity included in the Initial UE message, a target satellite base station configured to page the UE. The first access network identity (an access network identity corresponding to the access network type used by the UE) may be one of a plurality of access network identities included in the first information, that is, the access network type used by the UE may be an access network type supported by the first satellite base station.

S106: After receiving the Initial UE message sent by the first satellite base station, in a case where the first information of the first satellite base station includes one access network identity, the core network device stores the access network identity in a user context corresponding to the UE; and in a case where the Initial UE message includes a first access network identity, the core network device stores the first access network identity in a user context corresponding to the UE.

In order to facilitate subsequent paging of a UE, after receiving the Initial UE message sent by the first satellite base station, in a case where the core network device identifies that the Initial UE message does not include a first access network identity, and that the first information of the first satellite base station includes one access network identity, the core network device may store the access network identity in a user context corresponding to the UE. In a case where the core network device identifies that the Initial UE message includes the first access network identity, the core network device may store the first access network identity in the user context corresponding to the UE. When paging the UE subsequently, the core network device may determine, based on the stored corresponding relationship between the satellite base station and the corresponding first information, and the access network identity stored in the user context corresponding to the UE, a target satellite base station configured to page the UE.

In a possible implementation, after the core network device stores the access network identity in the user context corresponding to the UE, the UE may perform a mutual authentication and authorization process with the core network device, which is not described herein again. After the mutual authentication and authorization are completed, the core network device may send a registration success message to the UE, wherein the registration success message may be configured to indicate that the UE has been registered with the core network. After receiving the registration success message, the UE may return a registration complete message to the core network device, wherein the registration complete message may be configured to indicate that registration of the UE has been completed.

S107: The core network device determines, based on the stored corresponding relationship between the satellite base station and the corresponding first information, and the access network identity stored in the user context corresponding to the UE, a target satellite base station configured to page the UE.

S108: The core network device initiates a paging request for the UE to the target satellite base station.

In a possible implementation, the core network device may trigger paging of the UE. When paging the UE, the core network device may determine, based on the stored corresponding relationship between the satellite base station and the corresponding first information, and the access network identity stored in the user context corresponding to the UE, a target satellite base station configured to page the UE. For example, the core network device may, according to the access network identity stored in the user context, the stored corresponding relationship between the satellite base station and the access network identity (first information) corresponding to the access network type supported by the satellite base station, location information of the satellite base station, location information of the UE, etc., select (determine) the target satellite base station configured to page the UE from the satellite base stations which have established the NG connection with the core network device.

In addition, the core network device may further calculate corresponding beam footprint information (beam footprint list), wherein the process of calculating the beam footprint information may adopt the prior art, which is not described herein again. After determining the target satellite base station configured to page the UE and corresponding beam footprint information, the core network device may initiate, to the target satellite base station, a paging request for the UE, wherein the paging request may carry an access network identity (ANID) stored in the user context of the UE. In an exemplary embodiment, in addition to the access network identity (ANID) stored in the user context of the UE, the paging request may further carry the beam footprint information (beam footprint list) and the identity of the UE. After receiving the paging request, the target satellite base station may perform the following step in S109. As in the above embodiment, in a case where the first information includes one access network identity, the access network identity (the access network identity stored in the user context of the UE) included in the paging request may be the access network identity; and in a case where the first information includes a plurality of access network identities, the access network identity (the access network identity stored in the user context of the UE) included in the paging request may be the first access network identity included in the Initial UE message, which is not described herein again.

S109: After receiving the paging request initiated by the core network device, the target satellite base station may page the UE.

After receiving the paging request (paging) initiated by the core network device, the target satellite base station may determine, based on the access network identity and the beam footprint information (beam footprint list) carried in the paging request, beam footprints for an access network type corresponding to the access network identity, and implement paging of the UE based on the beam footprints.

In the embodiments of the present disclosure, the first satellite base station may send a first request to the core network device, wherein the first request may include first information, the first information may include at least one access network identity, and the access network identity may correspond to an access network type supported by the first satellite base station, such that the core network device may determine, based on the first information, a target satellite base station configured to page a UE, and may send a paging request for the UE to the target satellite base station, and the target satellite base station may page the UE after receiving the paging request. Based on this, the UE may be paged promptly after a base station is deployed on a satellite, so as to improve paging efficiency of the UE.

In the related art, different access networks are typically distinguished based on a coarse granularity perspective of different orbital layer types (e.g. Low Earth Orbit (LEO), Medium Earth Orbit (MEO), Geostationary Earth Orbit (GEO), etc.). However, in some embodiments of the present disclosure, considering that in an actual satellite networking scenario, even in the same orbital layer (e.g. LEO), the user link is highly likely to utilize multi-frequency band support, such as different frequency bands including L frequency band, X frequency band, and Ku frequency band. Satellite base stations supporting different frequency bands may be independent of each other, or may be completely multiplexed. The coverages of different frequency bands are different, and the paging ranges are also not the same. Therefore, if different access networks are distinguished from each other only from the coarse granularity perspective of different orbital layer types, the core network device lacks necessary information when paging the UE, and the accurate paging of the UE may not be achieved. In order to accurately page the UE, in the embodiments of the present disclosure, different access networks may be accurately and finely distinguished from each other in fine granularity, such as frequency bands (e.g. L frequency band, X frequency band, Ku frequency band, etc.) and polarization modes (e.g. including left-handed and right-handed polarization directions) of the access network. As such, the present disclosure may provide detailed accurate information about the access network in fine granularity, and may achieve accurate paging of the UE based on the detailed accurate information about the access network in fine granularity.

The access network identity corresponding to the access network type supported by the satellite base station may be predefined by a satellite network operator according to its own network characteristics, and different access network identities may distinguish different types of access networks such as different orbital altitudes (e.g. different orbital altitudes in a same orbital layer or different orbital layers), different frequency bands, and different polarization modes.

For example, when identifying the access network identity corresponding to the access network type used by the UE, the first satellite base station may first identify one or more of frequency band information, orbital altitude and polarization mode to which a frequency point used by the UE belongs. The first satellite base station may then, based on the pre-stored correlation (mapping relationship) between information such as an orbital altitude, a frequency band (frequency band information), a polarization mode of the access network and the access network identity, map information such as the frequency band information, the orbital altitude and the polarization mode to which the frequency point used by the UE belongs, to a corresponding access network identity, so as to obtain a first access network identity (e.g. 1, 2, 3, etc.). The first access network identity is not specifically limited in the present disclosure.

For example, when a certain access network identity is a first set value, it may indicate that one or more of the frequency band, the polarization direction, etc. of the access network corresponding to the access network identity is a first frequency band-polarization direction combination. The first set value is not specifically limited in the present disclosure. For example, the first set value may be a value such as 0. The frequency band, the polarization direction, etc. included in the first frequency band-polarization direction combination is also not specifically limited, and may be flexibly set according to requirements. In a case where a certain access network identity is a second set value, it may indicate that one or more of the frequency band, the polarization direction, etc. of the access network corresponding to the access network identity is a second frequency band-polarization direction combination. The second set value is not specifically limited in the present disclosure. For example, the second set value may be a value such as 1. The frequency band, the polarization direction, etc. included in the second frequency band-polarization direction combination is also not specifically limited. In a case where a certain access network identity is a third set value, it may indicate that one or more of the frequency band, the polarization direction, etc. of the access network corresponding to the access network identity is a third frequency band-polarization direction combination. The present disclosure does not specifically limit the third set value. For example, the third set value may be a value such as 2. The frequency band, the polarization direction, etc. included in the third frequency band-polarization direction combination are also not specifically limited. When a certain access network identity is a fourth set value, it may indicate that one or more of the frequency band, the polarization direction, etc. of the access network corresponding to the access network identity is a fourth frequency band-polarization direction combination. The fourth set value is not specifically limited in the preset disclosure. For example, the fourth set value may be a value such as 3. The frequency band, the polarization direction, etc. included in the fourth frequency band-polarization direction combination are also not specifically limited, and details will not be described herein.

In a possible embodiment, the access network identity may represent the orbital altitude of the access network. For example, in a case where the access network identity is a fifth set value, the access network identity may indicate that the orbital altitude of the access network corresponding to the access network identity is a first orbital altitude. In a case where the access network identity is a sixth set value, the access network identity may indicate that the orbital altitude of the access network corresponding to the access network identity is a second orbital altitude, and details will not be described herein. The orbital altitude of the access network (e.g. the first orbital altitude and the second orbital altitude) may be an orbital altitude in a Low Earth Orbit (LEO). The fifth set value and the sixth set value are not specifically limited in the present disclosure. For example, the fifth set value may be a value such as 4, and the sixth set value may be a value such as 5.

When the core network device pages the UE, the core network device may, according to detailed accurate information in fine granularity such as the orbital altitude, the frequency band and the polarization mode of the access network corresponding to the access network identity stored in the user context, the stored corresponding relationship between the satellite base station and the access network identity (first information) corresponding to the access network type supported by the satellite base station, location information of the satellite base station, location information of the UE, etc., accurately select (determine) the target satellite base station configured to page the UE from the satellite base stations which have established the NG connection with the core network device, wherein the target satellite base station supports the orbital altitude, the frequency band and the polarization mode of the access network corresponding to the access network identity (e.g. the first access network identity) stored in the user context.

As the detailed accurate information about the access network in fine granularity may be obtained in the embodiments of the present disclosure, accurate paging of the UE may be achieved based on the detailed accurate information about the access network in fine granularity when paging the UE.

In addition, in the embodiments of the present disclosure, network elements, such as the core network device, store a small amount of information therein, thus they have a high query efficiency, are simply maintained, and allow for straightforward implementation.

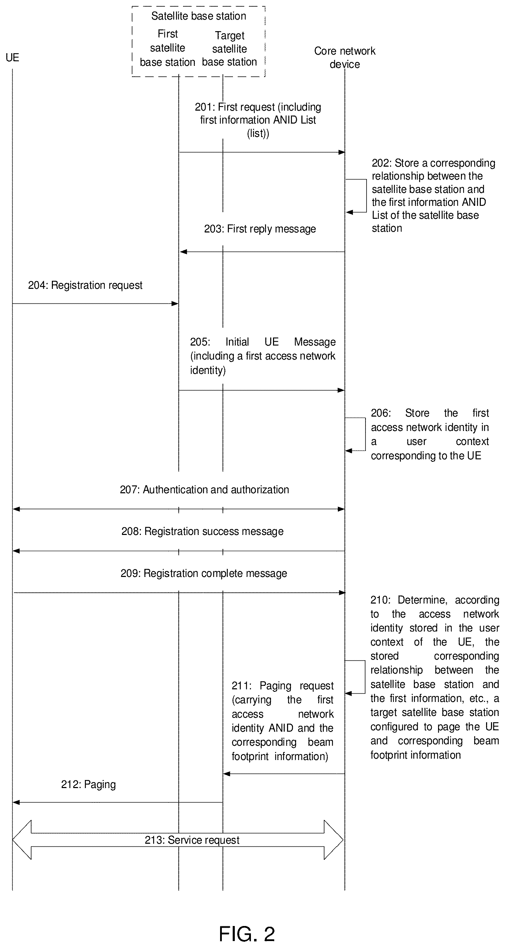

For ease of understanding, a communication process according to the present disclosure is described with reference to a specific embodiment. Referring to FIG. 2, FIG. 2 is a schematic diagram of another communication process according to an embodiment of the present disclosure. The process includes the following steps:
S201: A first satellite base station sends a first request (NG setup request) to a core network device, wherein the first request includes first information (ANID List), and the first information may indicate an access network identity corresponding to an access network type supported by the first satellite base station.

The definition of an Information Element (IE) ANID may be added in the existing 3rd Generation Partnership Project (3GPP) standard specifications. The ANID may be configured to identify different access network types in a New Radio-Non Terrestrial Network (NR-NTN) scenario.

For ease of understanding, the ANID in the embodiments of the present disclosure is described below in a table form in the standard specifications. Referring to Table 1, Table 1 is a schematic table of an ANID according to an embodiment of the present disclosure.

**Table 1**

| IE/Group Name | Presence | Range | IE type and reference | Semantics description |
|---|---|---|---|---|
| ANID | Mandatory (M) | INTEGER (0,...,15) | | |

Taking the total number of access network identities in the ANID List as 16 for an example, the value range of the access network identities in the ANID List may be [0,15], that is, the access network identities in the ANID List may be 0, 1, 2, 3, ..., 15, and different access network identities may represent different access network types.

In Table 1, the Presence of the information element ANID is set to "Mandatory (M)", and it may be considered that the information element ANID is required to be configured.

In addition, the NG Setup Request in the 3GPP standard specifications is also modified in the embodiments of the present disclosure. For specific modifications, reference may be made to Table 2. Table 2 is a schematic table of modifications to an NG setup request according to an embodiment of the present disclosure.

**Table 2**

| IE/Group Name | Presence | Range | IE type and reference | Semantics description | Criticality | Assigned Criticality |
|---|---|---|---|---|---|---|
| Message Type | Mandatory (M) | | 9.3.1.1 | | YES | reject |
| ... | ... | ... | ... | ... | ... | ... |
| Extended RAN Node Name | Optional (O) | | 9.3.1.193 | | YES | ignore |
| Supported ANID List | | 0..1 | | Indicates a list of access network types supported by the NG-RAN node in NTN | YES | ignore |
| Supported ANID Item | | The number of access network identities may be 1 to 16 | | | - | |
| >>ANID | Mandatory (M) | | 9.3.1.XX | In NTN, this IE is mandatory | - | |

The information elements such as Message Type, ..., and Extended RAN Node Name in Table 2 are existing information elements in the 3GPP standard specifications, and the present disclosure makes no modifications to these existing information elements, which is not described herein again. The three information elements Supported ANID List, >Supported ANID Item, and >>ANID in Table 2 are information elements newly added for the NG Setup Request according to the embodiments of the present disclosure. The relative positions of the three newly added information elements and the existing information elements in the 3GPP standard specifications are not specifically limited in the embodiments of the present disclosure.

In addition, the ANID List corresponding to the supported the access network types in Table 2 may be considered as the list of access network identities corresponding to the access network types supported by the satellite base station, and the range of the information element in Table 2 is set to 0..1, which indicates that the information element is optional, that is, the information element is not mandatory.

Moreover, the Criticality of the information element in the tables (including Table 2 and subsequent Table 3 and Table 4) is configured as "YES", which indicates that the criticality information for the information element is only applicable to non-repeatable IEs. In a case where the Assigned Criticality of the information element is configured as "ignore", it indicates that, in a case where the node receiving the IE does not understand the IE, and the Assigned Criticality of the IE is "ignore", the received node shall ignore the IE. 9.3.1.XX in the IE type and reference of the ANID indicates a location of the information element for the ANID defined in the protocol, and this location is not specifically limited in the present disclosure.

S202: The core network device stores a corresponding relationship between the first satellite base station and the access network identity (first information) corresponding to the access network type supported by the first satellite base station.

S203: The core network device sends a first reply message (e.g. an NG setup reply message) to the first satellite base station, wherein the first reply message may indicate that an NG connection has been established successfully.

S204: A UE initiates a registration request to the first satellite base station.

S205: After the first satellite base station receives the registration request initiated by the UE, in response to the registration request, and in a case where there are a plurality of access network identities in the first information, the first satellite base station sends an Initial UE message targeting the UE to the core network device, wherein the Initial UE message includes a first access network identity, the first access network identity is one of the plurality of access network identities included in the first information, and the first access network identity is determined according to an access network type used by the UE.

The Initial UE message in the 3GPP standard specifications is modified in the embodiments of the present disclosure. For specific modifications, reference may be made to Table 3. Table 3 is a schematic table of modifications to an Initial UE message according to an embodiment of the present disclosure.

**Table 3**

| IE/Group Name | Presence | Range | IE type and reference | Semantics description | Criticality | Assigned Criticality |
|---|---|---|---|---|---|---|
| Message Type | Mandatory (M) | | 9.3.1.1 | | YES | ignore |
| ... | ... | | ... | ... | ... | ... |
| RedCap Indication | Optional (O) | | 9.3.1.228 | | YES | ignore |
| ANID | Optional (O) | | 9.3.1.XX | Indicates the ANID used by UE when accessing the network in NTN. In NTN, this IE is mandatory. | YES | ignore |

The information elements such as Message Type, ..., and RedCap Indication in Table 3 are original information elements in the 3GPP standard specifications, and no modification is made to the original information elements in the present disclosure, which is not described herein again. The information element ANID in Table 3 is an optional information element newly added for the Initial UE message in the embodiments of the present disclosure. The relative positions between the newly added information element and the original information elements in the 3GPP standard specifications are not specifically limited in the embodiments of the present disclosure.

S206: The core network device stores the first access network identity in a user context corresponding to the UE.

S207: The UE and the core network device perform a mutual authentication and authorization process.

S208: The core network device sends a registration success message to the UE.

S209: After receiving the registration success message, the UE returns a registration complete message to the core network device.

S210: The core network device triggers paging of the UE, and the core network device determines (calculates), according to the first access network identity stored in the user context of the UE, the stored corresponding relationship between the satellite base station and the first information, etc., a target satellite base station configured to page the UE and corresponding beam footprint information.

Since the location of the satellite generally changes constantly, the location of the first satellite base station configured on the satellite also generally changes constantly. It takes a certain time between reception of the registration request initiated by the UE and initiating the paging request for the UE by the core network device, therefore, the target satellite base station configured to page the UE determined by the core network device may include the first satellite base station, and may also not include the first satellite base station. The number of target satellite base stations may be one or more, and is not specifically limited in the present disclosure.

For example, the number of target satellite base stations may be one, and this one target satellite base station may be the first satellite base station, and may also be a satellite base station other than the first satellite base station.

There may also be a plurality of target satellite base stations, the plurality of target satellite base stations may all be satellite base stations other than the first satellite base station, and the plurality of target satellite base stations may also include the first satellite base station, which is not specifically limited in the present disclosure.

S211: The core network device separately sends a paging request to each target satellite base station, wherein the paging request may carry the first access network identity (ANID) stored in the user context of the UE and the corresponding beam footprint information.

The paging request in the 3GPP standard specifications is modified in the embodiments of the present disclosure. For specific modifications, reference may be made to Table 4. Table 4 is a schematic table of modifications to a paging request according to an embodiment of the present disclosure.

**Table 4**

| IE/Group Name | Presence | Range | IE type and reference | Semantics description | Criticality | Assigned Criticality |
|---|---|---|---|---|---|---|
| Message Type | Mandatory (M) | | 9.3.1.1 | | YES | ignore |
| ... | ... | ... | ... | ... | ... | ... |
| PEIPS Assistance Information | Optional (O) | | 9.3.1.232 | | YES | ignore |
| ANID | O | | 9.3.1.XX | Indicates the access network identity of a UE paged by the NG-RAN node. | YES | ignore |
| | | | | In NTN, this IE is mandatory. | | |

The information elements such as Message Type, ..., and PEIPS Assistance Information in Table 4 are original information elements in the 3GPP standard specifications, and no modification is made to the information elements in the present application, which is not described herein again. The information element ANID in Table 4 is an optional information element newly added for the paging request in the embodiments of the present disclosure. The relative positions between the newly added information element and the original information elements in the 3GPP standard specifications are not specifically limited in the embodiments of the present disclosure.

S212: After receiving the paging request, the target satellite base station may determine corresponding beam footprints on the basis of the access network identity and the beam footprint information carried in the paging request, and page the UE based on the beam footprints.

S213: The UE sends a service request to the core network device.

The process in which the UE sends a service request to the core network device, and the core network device processes the service request may adopt existing related techniques, which is not described herein again.

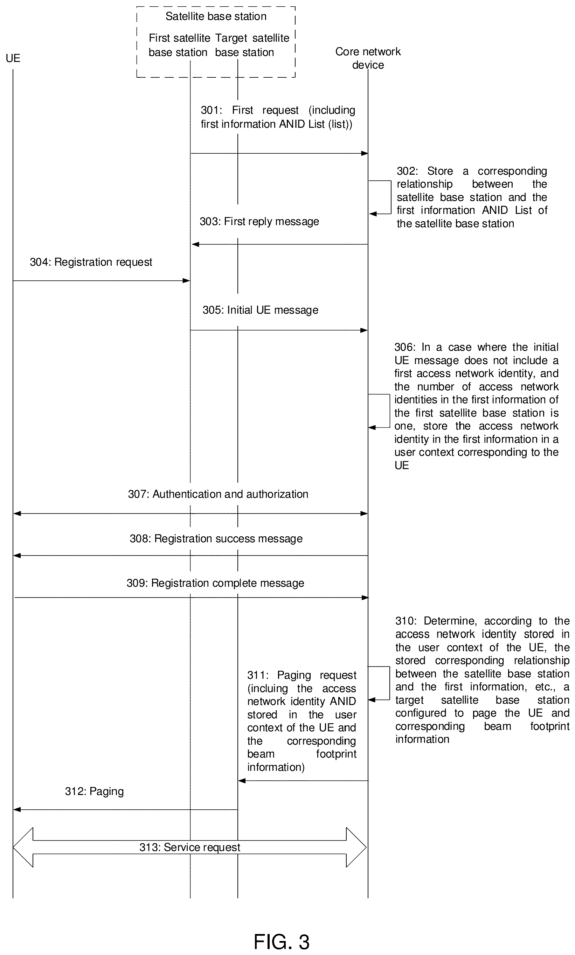

For ease of understanding, a communication process provided by the present disclosure is described below with reference to a specific embodiment. Referring to FIG. 3, FIG. 3 is a schematic diagram of yet another communication process according to an embodiment of the present disclosure. The process includes the following steps:
S301: A first satellite base station sends a first request (NG setup request) to a core network device, wherein the first request includes first information (ANID List), and the first information may indicate an access network identity corresponding to an access network type supported by the first satellite base station.
S302: The core network device stores a corresponding relationship between the first satellite base station and the access network identity (first information) corresponding to the access network type supported by the first satellite base station.
S303: The core network device sends a first reply message (e.g. an NG setup reply message) to the first satellite base station, wherein the first reply message may indicate that an NG connection has been established successfully.
S304: A UE initiates a registration request to the first satellite base station.
S305: After the first satellite base station receives the registration request initiated by the UE, in response to the registration request, the first satellite base station sends an Initial UE message for the UE to the core network device.
   Taking the number of access network identities in the first information as one for an example, the Initial UE message may not include the access network identity.
S306: The core network device receives the Initial UE message for the UE sent by the first satellite base station; in a case where the Initial UE message does not include a first access network identity, and the number of access network identities in the first information of the first satellite base station is one, the core network device stores the access network identity in the first information in a user context corresponding to the UE.
S307: The UE and the core network device perform a mutual authentication and authorization process.
S308: The core network device sends a registration success message to the UE.
S309: After receiving the registration success message, the UE returns a registration complete message to the core network device.
S310: The core network device triggers paging of the UE, and the core network device determines (calculates), according to the access network identity stored in the user context of the UE, the stored corresponding relationship between the satellite base station and the first information, etc., a target satellite base station configured to page the UE and corresponding beam footprint information.
S311: The core network device separately sends a paging request to each target satellite base station, wherein the paging request may include (carry) the access network identity (ANID) in the user context of the UE and the corresponding beam footprint information.
S312: After receiving the paging request, the target satellite base station may determine corresponding beam footprints based on the access network identity and the beam footprint information carried in the paging request, and accurately page the UE based on the beam footprints.
S313: The UE sends a service request to the core network device.

According to the same technical concept, the present disclosure provides a communication apparatus. The communication apparatus may include a unit or a module configured to execute a method corresponding to the first satellite base station, or include a unit or a module configured to execute a method corresponding to the core network device.

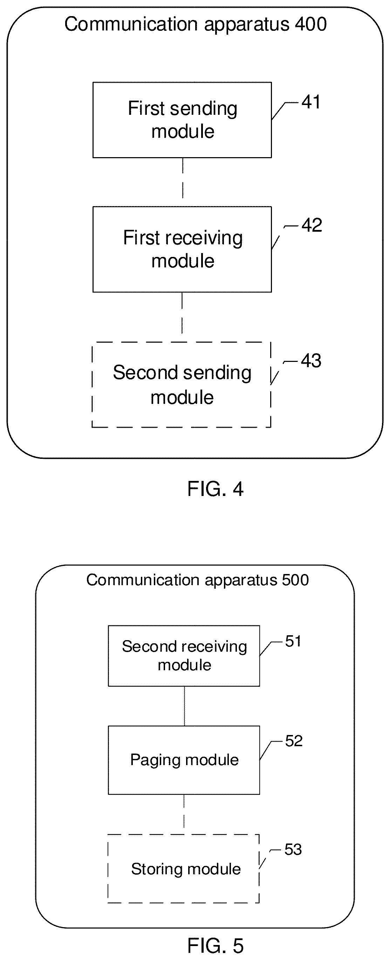

Referring to FIG. 4, FIG. 4 is a schematic structural diagram of a communication apparatus 400 according to an embodiment of the present disclosure. When the communication apparatus 400 executes the steps of the method corresponding to the first satellite base station, the communication apparatus includes:
a first sending module 41, configured to send a first request to a core network device, wherein the first request includes first information, the first information includes at least one access network identity, and the access network identity is an access network identity corresponding to an access network type supported by the first satellite base station; the first information is configured to determine a target satellite base station, and the target satellite base station receives a paging request from the core network device.

In a possible implementation, the access network identity is configured to represent at least one of an orbital altitude, a frequency band or a polarization mode of an access network.

In a possible implementation, the apparatus further includes:
a first receiving module 42, configured to receive a registration request sent by a UE; and
a second sending module 43, configured to send an Initial UE message for the UE to the core network device in response to the registration request.

In a possible implementation, the second sending module 43 is specifically configured such that:
in a case where the first information includes one access network identity, the access network identity is configured to determine the target satellite base station; and/or
in a case where the first information includes a plurality of access network identities, the Initial UE message includes a first access network identity, the first access network identity is one of the plurality of access network identities, and the first access network identity is configured to determine the target satellite base station, wherein the first access network identity is determined according to an access network type used by the UE.

In a possible implementation, the access network type used by the UE is determined based on frequency band information to which a frequency point used by the UE belongs.

In a possible implementation, in a case where the first information includes one access network identity, the paging request includes the access network identity and beam footprint information; and/or
in a case where the first information includes a plurality of access network identities, the paging request includes the first access network identity and beam footprint information.

In a possible implementation, the target satellite base station includes at least one base station.

Referring to FIG. 5, FIG. 5 is a schematic structural diagram of another communication apparatus 500 according to an embodiment of the present disclosure. When the communication apparatus 500 executes the steps of the method corresponding to the core network device, the communication apparatus includes:
a second receiving module 51, configured to receive a first request sent by a first satellite base station, wherein the first request includes first information, the first information includes at least one access network identity, the access network identity is an access network identity corresponding to an access network type supported by the first satellite base station, and the first information is configured to determine a target satellite base station; and
a paging module 52, configured to send a paging request to the target satellite base station.

In a possible implementation, the access network identity is configured to represent at least one of an orbital altitude, a frequency band or a polarization mode of an access network.

In a possible implementation, the second receiving module 51 is further configured to:
receive an Initial UE message for a UE sent by the first satellite base station.

In a possible implementation, the second receiving module 52 is further configured such that:
in a case where the first information includes one access network identity, the access network identity is configured to determine the target satellite base station; and/or
in a case where the Initial UE message includes a first access network identity, the first access network identity is configured to determine the target satellite base station, wherein the first access network identity is one of a plurality of access network identities included in the first information, and the first access network identity is determined according to an access network type used by the UE.

In a possible implementation, in a case where the first information includes one access network identity, the paging request includes the access network identity and beam footprint information; and/or
in a case where the first information includes a plurality of access network identities, the paging request includes the first access network identity and beam footprint information.

In a possible implementation, the target satellite base station includes at least one base station.

In a possible implementation, the apparatus further includes:
a storing module 53, configured to, in a case where the first information includes one access network identity, store the access network identity in a user context corresponding to the UE, and
in a case where the Initial UE message includes a first access network identity, store the first access network identity in a user context corresponding to the UE.

In a possible implementation, the storing module 53 is further configured to:
store a corresponding relationship between the first satellite base station and the first information.

In a possible implementation, the second receiving module 51 is further configured such that:
in a case where the first information includes one access network identity, the access network identity and a stored corresponding relationship between the satellite base station and the first information are configured to determine the target satellite base station; and
in a case where the Initial UE message includes the first access network identity, the first access network identity and a stored corresponding relationship between the satellite base station and the first information are configured to determine the target satellite base station.

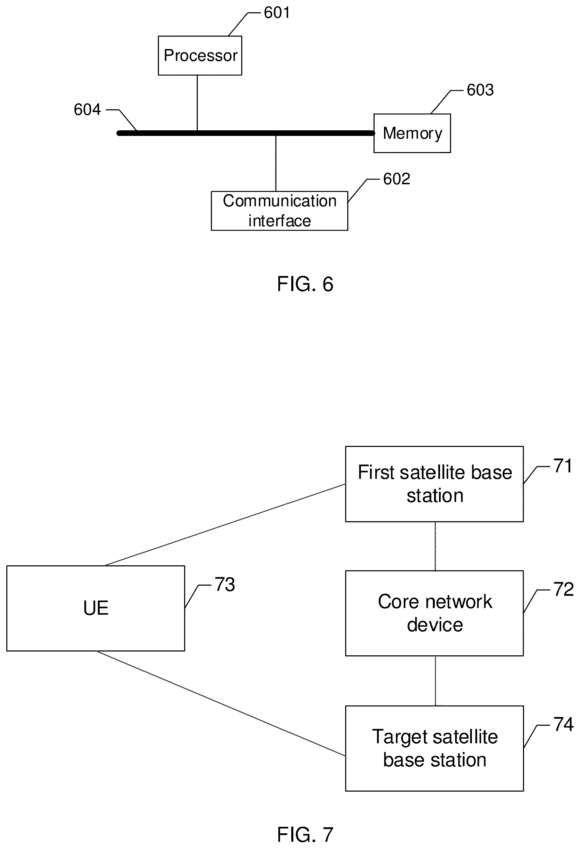

According to the same technical concept, the embodiments of the present disclosure further provide a communication apparatus based on the described above embodiments. Referring to FIG. 6, FIG. 6 is a schematic structural diagram of yet another communication apparatus according to an embodiment of the present disclosure. The communication apparatus includes: a processor 601, a communication interface 602, a memory 603, and a communication bus 604, wherein the processor 601, the communication interface 602, and the memory 603 communicate with each other via the communication bus 604;
the memory 603 stores a computer program that, when executed by the processor 601, causes the processor 601 to execute the steps of any communication method as discussed above, and details will not be described herein again.

The communication bus mentioned in the communication apparatus (electronic device) may be a Peripheral Component Interconnect (PCI) bus, or an Extended Industry Standard Architecture (EISA) bus, or the like. The communication bus may be classified into an address bus, a data bus, a control bus, and the like. For ease of representation, only one bold line is shown in the figure, which does not mean there is only one bus or one type of bus.

The communication interface 602 is configured for communication between the communication apparatus (electronic device) and other devices.

The memory may include a Random Access Memory (RAM), and may also include a Non-Volatile Memory (NVM), for example, at least one disk memory. In an exemplary embodiment, the memory may also be at least one storage device located remotely from the processor.

The processor may be a general purpose processor, including a central processing unit, a Network Processor (NP), and the like. The processor may also be a Digital Signal Processing (DSP), an application-specific integrated circuit, a field programmable gate array or another programmable logic device, a discrete gate or transistor logic device, a discrete hardware component, or the like.

According to the same technical concept, the present disclosure further provides a communication system. Referring to FIG. 7, FIG. 7 is a schematic structural diagram of a communication system according to an embodiment of the present disclosure. The communication system may include a first satellite base station 71 and a core network device 72, and may further include the UE 73. In addition, the communication system may further include the target satellite base station 74. As the communication system solves the problem in a similar principle to the described communication method, for the implementation of the communication system, reference may be made to the implementation of the method, and details will not described herein again.

According to the same inventive concept, the embodiments of the present disclosure provide a computer-readable storage medium. The computer program product includes: a computer program code which, when run on a computer, causes the computer to execute the steps of any communication method as discussed above. As the computer readable storage medium solves the problem in a similar principle to the communication method, for the implementation of the computer readable storage medium, reference may be made to the implementation of the method, and details will not described herein again.

The computer-readable storage medium may be any available medium or data storage means that can be accessed by a processor in an electronic device, including but not limited to magnetic memories such as a floppy disk, a hard disk, a magnetic tape and a magneto optical disc (MO), optical memories such as a Compact Disc (CD), a Digital Versatile Disc (DVD), a Blu-ray Disc (BD) and High Definition Versatile Disc (HVD), and semiconductor memories such as a Read-Only Memory (ROM), an Erasable Programmable Read-Only Memory (EPROM), an Electrically Erasable Programmable Read-Only Memory (EEPROM), a non-volatile memory, a NAND Flash, a Solid State Drive (SSD), etc.

According to the same inventive concept, the embodiments of the present disclosure further provide a computer program product. The computer program product includes: a computer program code which, when run on a computer, causes the computer to execute the steps of any communication method as discussed above. As the computer program product solves the problem in a similar principle to the communication method, for the implementation of the computer program product, reference may be made to the implementation of the method, and details are not repeatedly described herein.

Those skilled in the art shall understand that the embodiments of the present disclosure may be provided as a method, a system or a computer program product. Therefore, the present disclosure may take a form of an entirely hardware embodiment, an entirely software embodiment or an embodiment combining software and hardware. Furthermore, the present disclosure may take the form of a computer program product implemented on one or more computer-usable storage media (including but not limited to a disk memory, a Compact Disc Read-Only Memory (CD-ROM), an optical memory, and the like) containing computer-usable program codes.

The present disclosure is described with reference to the flowcharts and/or block diagrams of the method, device (system), and computer program product according to the present disclosure. It should be understood that each flow and/or block in the flowcharts and/or block diagrams and combinations of flows and/or blocks in the flowcharts and/or block diagrams may be implemented by computer program instructions. These computer program instructions may be provided to a processor of a general purpose computer, a special purpose computer, an embedded processor or other programmable data processing device to produce a machine, such that the instructions executed by the processor of the computer or other programmable data processing device generate a means for implementing the functions specified in one or more flows in the flowcharts and/or one or more blocks in the block diagrams.

These computer program instructions may also be stored in a computer readable memory capable of guiding a computer or other programmable data processing device to work in a specific manner, such that the instructions stored in the computer readable memory generate a manufactured product including an instruction means, and the instruction means implements the functions specified in one or more flows in the flowcharts and/or one or more blocks in the block diagrams.

These computer program instructions may also be loaded onto a computer or other programmable data processing device, causing a series of operational steps to be performed on the computer or other programmable device to produce computer implemented processing, such that the instructions executed on the computer or other programmable device provide steps for implementing the functions specified in one or more flows in the flowcharts and/or one or more blocks in the block diagrams.

Obviously, those skilled in the art may make various modifications and variations to the present disclosure without departing from the spirit and scope of the present disclosure. As such, if these modifications and variations of the present disclosure belong to the scope of the claims of the present disclosure and their equivalents, the present disclosure is intended to include these modifications and variations.

## Claims

1. A communication method, applied to a first satellite base station, the method comprising:
sending a first request to a core network device, wherein the first request comprises first information, the first information comprises at least one access network identity each corresponding to an access network type supported by the first satellite base station; the first information is configured to determine a target satellite base station, and the target satellite base station is a satellite base station which receives a paging request from the core network device.

2. The method according to claim 1, wherein the access network identity is configured to represent at least one of an orbital altitude, a frequency band or a polarization mode of an access network.

3. The method according to claim 1, wherein the method further comprises:
receiving a registration request sent by a user equipment (UE); and
sending an initial UE message for the UE to the core network device in response to the registration request.

4. The method according to claim 3, wherein the first information is configured to determine a target satellite base station, comprising:
in a case where the first information comprises one access network identity, the one access network identity being configured to determine the target satellite base station; and/or,
in a case where the first information comprises a plurality of access network identities, the initial UE message comprising a first access network identity, the first access network identity being one of the plurality of access network identities, and the first access network identity being configured to determine the target satellite base station, wherein the first access network identity is determined according to an access network type used by the UE.

5. The method according to claim 4, wherein the access network type used by the UE is determined based on frequency band information to which a frequency point used by the UE belongs.

6. The method according to claim 4, wherein in a case where the first information comprises the one access network identity, the paging request comprises the one access network identity and beam footprint information; and/or,
in a case where the first information comprises a plurality of access network identities, the paging request comprises the first access network identity and beam footprint information.

7. The method according to claim 1, wherein the target satellite base station comprises at least one base station.

8. A communication method, applied to a core network device, the method comprising:
receiving a first request sent by a first satellite base station, wherein the first request comprises first information, the first information comprises at least one access network identity each corresponding to an access network type supported by the first satellite base station, and the first information is configured to determine a target satellite base station; and
sending a paging request to the target satellite base station.

9. The method according to claim 8, wherein the access network identity is configured to represent at least one of an orbital altitude, a frequency band or a polarization mode of an access network.

10. The method according to claim 8, wherein after receiving the first request sent by the first satellite base station and before sending the paging request to the target satellite base station, the method further comprises:
receiving an initial UE message for a UE sent by the first satellite base station.

11. The method according to claim 10, wherein the first information is configured to determine a target satellite base station, comprising:
in a case where the first information comprises one access network identity, the one access network identity being configured to determine the target satellite base station; and/or,
in a case where the initial UE message comprises a first access network identity, the first access network identity being configured to determine the target satellite base station, wherein the first access network identity is one of a plurality of access network identities comprised in the first information, and the first access network identity is determined according to an access network type used by the UE.

12. The method according to claim 11, wherein in a case where the first information comprises one access network identity, the paging request comprises the one access network identity and beam footprint information; and/or,
in a case where the first information comprises the plurality of access network identities, the paging request comprises the first access network identity and beam footprint information.

13. The method according to claim 8, wherein the target satellite base station comprises at least one base station.

14. The method according to claim 11, wherein after receiving the initial UE message for the UE sent by the first satellite base station and before sending the paging request to the target satellite base station, the method further comprises:
in a case where the first information comprises one access network identity, storing the one access network identity in a user context corresponding to the UE;
in a case where the initial UE message comprises a first access network identity, storing the first access network identity in the user context corresponding to the UE.

15. The method according to claim 8, wherein after receiving the first request sent by the first satellite base station and before sending the paging request to the target satellite base station, the method further comprises:
storing a corresponding relationship between the first satellite base station and the first information.

16. The method according to claim 11, wherein the first information is configured to determine a target satellite base station, comprising:
in a case where the first information comprises the one access network identity, the one access network identity and a stored corresponding relationship between a satellite base station and the first information being configured to determine the target satellite base station; and
in a case where the initial UE message comprises the first access network identity, the first access network identity and a stored corresponding relationship between a satellite base station and the first information being configured to determine the target satellite base station.

17. A communication apparatus, comprising a unit or a module configured to execute steps of the method according to any one of claims 1-7, or comprising a unit or a module configured to execute steps of the method according to any one of claims 8-16.

18. A communication apparatus, comprising: one or more processors, configured to execute steps of the method according to any one of claims 1-7, or to execute steps of the method according to any one of claims 8-16.

19. A communication system, comprising: a first satellite base station that executes steps of the method according to any one of claims 1-7, and a core network device that executes steps of the method according to any of claims 8-16.

20. A computer readable storage medium, wherein the computer readable storage medium stores a computer program or an instruction that, when executed by a communication apparatus, implements steps of the method according to any one of claims 1-7, or steps of the method according to any one of claims 8-16.

21. A computer program product, wherein when the computer program product is invoked by a computer, causes the computer to execute steps of the method according to any one of claims 1-7, or steps of the method according to any one of claims 8-16.
